# EUROPÄISCHE PATENTSCHRIFT

(11) **EP 2 576 301 B1**
(45) Veröffentlichungstag und Bekanntmachung des Hinweises auf die Patenterteilung: **30.03.2016**
(21) Anmeldenummer: 11721322.3
(22) Anmeldetag: 25.05.2011
(51) Int. Cl.: B60T 13/68, B60T 13/26

(54) **ELEKTRISCH BETÄTIGBARES FESTSTELLBREMSSYSTEM UND VERFAHREN ZUM BETREIBEN EINES ELEKTRISCH BETÄTIGBAREN FESTSTELLBREMSSYSTEMS**
ELECTRICALLY ACTUABLE PARKING BRAKE SYSTEM AND METHOD FOR OPERATING AN ELECTRICALLY ACTUABLE PARKING BRAKE SYSTEM
SYSTÈME DE FREINAGE DE STATIONNEMENT ÉLECTRIQUE, ET PROCÉDÉ POUR FAIRE FONCTIONNER UN SYSTÈME DE FREINAGE DE STATIONNEMENT ÉLECTRIQUE

(30) Priorität: 28.05.2010 DE 102010021911
(43) Veröffentlichungstag der Anmeldung: 10.04.2013
(73) Patentinhaber: KNORR-BREMSE Systeme für Nutzfahrzeuge GmbH, 80809 München (DE)
(72) Erfinder: KAUPERT, Oliver, 80995 München (DE)
(74) Vertreter: Schönmann, Kurt
(86) Internationale Anmeldenummer: PCT/EP2011/058535
(87) Internationale Veröffentlichungsnummer: WO 2011/147861

(56) Entgegenhaltungen:
- DE-A1-102006 041 012
- DE-A1-102007 014 423
- DE-B3-102008 007 877

## Beschreibung

Die Erfindung betrifft ein elektrisch betätigbares Feststellbremssystem für ein Fahrzeug, insbesondere ein Nutzfahrzeug, mit einer Steuerventileinrichtung, die mit einem Relaissteuereingang eines Relaisventils verbundenen ist, wobei das Relaisventil einen Versorgungseingang und eine Entlüftung umfasst und zumindest einen Federspeicherbremszylinder belüftet und entlüftet, und wobei die Steuerventileinrichtung einen Entlüftungsanschluss umfasst, der mit der Entlüftung des Relaisventils verbunden ist, wobei die Steuerventileinrichtung einen ersten Arbeitsanschluss und einen zweiten Arbeitsanschluss umfasst, und der erste Arbeitsanschluss mit einem ersten Versorgungsleitungsabschnitt verbunden ist, und der zweite Arbeitsanschluss mit einem Anhängersteuerleitungszweig verbunden ist, der in einem Steuereingang eines Anhängersteuermoduls mündet.

Die Erfindung betrifft weiterhin ein Verfahren zum Betreiben eines elektrisch betätigbaren Feststellbremssystems eines Fahrzeugs, insbesondere eines Nutzfahrzeugs, mit einer Steuerventileinrichtung, die mit einem Relaissteuereingang eines Relaisventils verbunden ist, wobei die Steuerventileinrichtung einen Entlüftungsanschluss umfasst, der mit der Entlüftung des Relaisventils verbunden ist, wobei zumindest ein Federspeicherbremszylinder über einen Versorgungsanschluss des Relaisventils belüftet wird und über die Entlüftung des Relaisventils entlüftet wird, wobei der Relaissteuereingang des Relaisventils über die Entlüftung des Relaisventils entlüftet wird, wobei der Relaissteuereingang von einem Select-Low-Ventil mit Druck beaufschlagt wird, und wobei das Select-Low-Ventil weiterhin durch einen Anhängersteuerleitungszweig und einen weiteren Anhängersteuerleitungszweig mit Druck beaufschlagt wird.

Die vorliegende Offenbarung befasst sich mit elektrisch betätigbaren Feststellbremssystemen, wie sie beispielsweise aus der DE 10 2008 007 877 B3 bekannt sind. Bei derartigen Systemen erfolgt die Entlüftung des Steuerraums der zentralen Steuerventileinrich tung, dass heißt insbesondere die Entlüftung des die Federbremsspeicherzylinder be- und entlüftenden Relaisventils über eine außen am Fahrzeugrahmen angeordnete Entlüftung, die somit Umwelteinflüssen von außen, zum Beispiel Spritzwasser, Strahlwasser, Staub oder Schlamm ausgesetzt ist. Damit diese äußeren Umwelteinflüsse nicht über die Entlüftung in die Anlage eindringen können, muss zum Schutz ein entsprechendes Bauteil vorgesehen sein, welches in die Entlüftungsrichtung öffnet und in die entgegengesetzte Richtung sperrt. Dazu geeignet sind unter anderem Nutringe, leicht vorgespannte Gummischeiben oder Sinterfilter.

Diese zum Schutz vorgesehenen Bauteile können, insbesondere durch Vereisung oder Verschmutzung, ihre eigentliche Funktion verlieren, sodass sie an der Entlüftung einen erhöhten Staudruck verursachen. Dies ist besonders bei einem abgestellten Fahrzeug relevant, welches üblicherweise eine geschlossene Feststellbremse mit drucklosen Steuerleitungen aufweist. Weisen die angrenzenden Ventile eine erhöhte Leckagerate auf, kann ein schleichender Druckaufbau in der Steuerleitung erfolgen. Auf diese Weise könnte sich in den Steuerleitungen der elektrisch betätigbaren Feststellbremse unbeabsichtigt ein großer Druck aufbauen, der zu einem unbeabsichtigten Betätigen der Feststellbremsanlage führen könnte. Außerdem können die vorgesehene Bauteile, insbesondere wenn sie verschmutzt oder vereist sind, zu einer unerwünschten Geräuschentwicklung bei der Entlüftung der Steuerleitungen führen.

Bei einer konventionellen pneumatischen Parkbremsanlage, tritt diese Problematik nicht auf, da die Entlüftung der Steuerleitungen der Parkbremsanlage, die im Parkzustand mit der Atmosphäre verbunden sind, über das Handbremsventil erfolgt, welches im Inneren der Fahrerkabine geschützt angeordnet ist. Schädliche Umwelteinflüsse können somit sicher vermieden werden.

Aus der DE 10 2006 041 012 A1 ist ein Feststellbremssystem bekannt, bei der die Entlüftung von ein Relaisventil ansteuernden Leitungen über eine Entlüftung erfolgt, die auch für das Relaisventil, das Federspeicherzylinder be- und entlüftet, genutzt wird.

Die DE 10 2007 014 423 A1 beschreibt ebenfalls ein Feststellbremssystem das eine gemeinsame Entlüftung für das Relaisventil und die das Relaisventil ansteuernde Leitung vorsieht.

Der Erfindung liegt die Aufgabe zugrunde, eine einfache Anpassung des Feststellbremssystems an unterschiedliche Anhängersteuersysteme unter Berücksichtigung der oben angesprochenen Problematik zu erlauben.

Diese Aufgabe wird mit den Merkmalen der unabhängigen Ansprüche gelöst.

Vorteilhafte Ausführungsformen der Erfindung sind in den abhängigen Ansprüchen angegeben.

Das gattungsgemäße Feststellbremssystem wird erfindungsgemäß dadurch weiterentwickelt, dass der weitere Anhängersteuerleitungszweig über einen Entlüftungsmagnetventilanschluss eines Entlüftungsmagnetventils entlüftet wird, wobei der Entlüftungsmagnetventilanschluss mit der Entlüftung des Relaisventils verbunden ist. Dies erlaubt eine einfache Anpassung des Feststellbremssystems an unterschiedliche Anhängersteuerungssysteme. Auf diese Weise kann auf zusätzliche Bauteile zum Schutz des Entlüftungsausgangs der Steuerleitungen verzichtet werden. Da beim Schließen der Feststellbremse ein verhältnismäßig großes Luftvolumen der Federspeicherbremszylinder über die Entlüftung des Relaisventils abgelassen wird und dies unmittelbar vor jeder "Nutzung" zur Entlüftung der Steuerleitungen geschieht, kann während der gesamten Parkdauer eine einwandfreie Funktion der Entlüftung gewährleistet werden, selbst wenn zuvor während der Fahrt Schmutz oder Eis die Entlüftung des Relaisventils zugesetzt haben. Weiterhin stellt die Entlüftung des Relaisventils einen sehr großen Öffnungsquerschnitt zur Verfügung und verfügt in typischen Ausführungsformen über einen Schalldämpfer, der beispielsweise ein Gestrick umfasst und ohne bewegliche Teile auskommt. Eine unbeabsichtigte Geräuschbelastung kann somit sicher verhindert werden.

Vorteilhafterweise kann vorgesehen sein, dass der Entlüftungsanschluss über eine Steuer- und Entlüftungsventileinrichtung mit der Entlüftung des Relaisventils verbunden ist.

In diesem Zusammenhang kann vorgesehen sein, dass der Entlüftungsanschluss der Steuerventileinrichtung mit einem ersten Anschluss der Steuer- und Entlüftungsventileinrichtung verbunden ist, und dass die Steuer- und Entlüftungsventileinrichtung einen zweiten Anschluss, der mit einem zweiten Versorgungsleitungsabschnitt verbunden ist, und einen dritten Anschluss, der mit der Entlüftung verbunden ist, umfasst.

In einer weiteren Ausführungsform kann vorgesehen sein, dass der Relaissteuereingang über ein Select-Low-Ventil mit dem Anhängersteuerleitungszweig und mit dem weiteren Anhängersteuerleitungszweig verbunden ist.

Das gattungsgemäße Verfahren wird dadurch weiterentwickelt, dass der weitere Anhängersteuerleitungszweig über einen Entlüftungsmagnetventilanschluss eines Entlüftungsmagnetventils entlüftet wird, wobei der Entlüftungsmagnetventilanschluss mit der Entlüftung des Relaisventils verbunden ist.

Auf diese Weise werden die Vorteile und Besonderheiten der erfindungsgemäßen Vorrichtung auch im Rahmen eines Verfahrens umgesetzt.

Vorteilhafterweise kann dabei vorgesehen sein, dass bei geöffneter Feststellbremse der Relaissteuereingang und der Anhängersteuerleitungszweig oder der weitere Anhängersteuerleitungszweig durch kurzzeitiges Betätigen der Steuerventileinrichtung beziehungsweise einer Steuer- und Entlüftungsventileinrichtung teilweise entlüftet wird, um ein teilweises Schließen der Feststellbremse zu bewirken.

Die Erfindung wird nun mit Bezug auf die begleitenden Zeichnungen anhand besonders bevorzugter Ausführungsformen beispielhaft erläutert.

Es zeigen:
- Figur 1: ein Schaltungsdiagramm eines elektrisch betätigbaren Feststellbremssystems in einem ersten Schaltzustand;
- Figur 2: ein Schaltungsdiagramm eines elektrisch betätigbaren Feststellbremssystems in einem zweiten Schaltzustand;
- Figur 3: ein Schaltungsdiagramm eines elektrisch betätigbaren Feststellbremssystems in einem dritten Schaltzustand; und
- Figur 4: ein Schaltungsdiagramm eines elektrisch betätigbaren Feststellbremssystems in einem vierten Schaltzustand.

Bei der nachfolgenden Beschreibung der Schaltungsdiagramme bezeichnen gleiche Bezugszeichen gleiche oder vergleichbare Komponenten.

Die Schaltungen umfassen als zentrale Einrichtung 3/2-Wegeventile. Diese können jeweils durch zwei 2/2-Wegeventile ersetzt werden, wobei die anhand der 3/2-Wegeventil erläuterten Grundsätze dann im Rahmen der vorliegenden Erfindung auf die 2/2-Wegeventilgruppen zu übertragen sind.

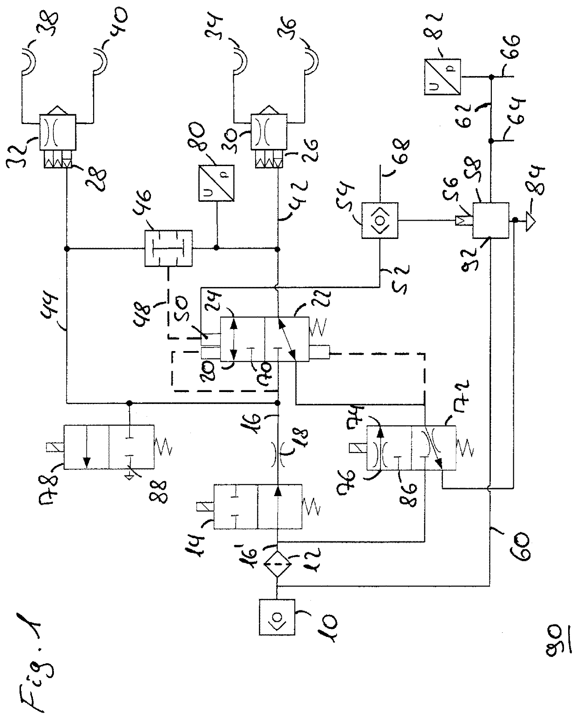

Figur 1 zeigt ein Schaltungsdiagramm eines elektrisch betätigbaren Feststellbremssystems. Das elektrisch betätigbare Feststellbremssystem 90 ist über ein Rückschlagventil 10 mit einer nicht dargestellten Druckluftaufbereitungsanlage verbunden. Auf das Rückschlagventil 10 folgt eine optionale Filtereinheit 12, über die Druckluft einem Versorgungsmagnetventil 14, das als 2/2-Wegeventil ausgelegt ist, zugeführt wird. An den Ausgang des Versorgungsmagnetventils 14 ist über einen ersten Versorgungsleitungsabschnitt 16 und eine optionale Drossel 18 ein erster Arbeitsanschluss 20 einer Steuerventileinrichtung 22 angeschlossen. Der Leitungsabschnitt mit der Filtereinheit 12 wird als zweiter Versorgungsleitungsabschnitt 16' bezeichnet. Die Steuerventileinrichtung 22 ist als pneumatisch ansteuerbares 3/2-Wegeventil ausgelegt. Ein zweiter Arbeitsanschluss 24 der Steuerventileinrichtung 22 führt über einen Anhängersteuerleitungszweig 42 zu einem Steuereingang 26 eines Anhängersteuermoduls 30. Dieses bedient einen Versorgungsanschluss 34 und einen Steueranschluss 36 der Anhängerkupplung. Ein Steuereingang 28 eines weiteren Anhängersteuermoduls 32 ist über einen weiteren Anhängersteuerleitungszweig 44 mit dem Versorgungsleitungszweig 16 verbunden. Es hat einen Versorgungsanschluss 38 und einen Steueranschluss 40. Die Anhängersteuerleitungszweige 42, 44 sind mit Eingängen eines Select-Low-Ventils 46 verbunden, dessen Ausgang über eine Steuerleitung 48 mit einem Steuereingang 50 der Steuerventileinrichtung 22 verbunden ist. Das Select-Low-Ventil 46 arbeitet so, dass an seinem Ausgang, das heißt in der Steuerleitung 48, der niedrigere Eingangsdruck ansteht, das heißt der niedrigere Druck aus den beiden Anhängersteuerungsleitungszweigen 42, 44. Die Steuerleitung 48 steht weiterhin über eine Relaissteuerleitung 52 und ein Wechselventil 54 mit dem Relaissteuereingang 56 eines Relaisventils 58 in Verbindung. Das Relaisventil 58 bezieht an einem Versorgungsanschluss 92 über eine Relaisversorgungsleitung 60 Druckluft von einer Stelle stromaufwärts des Versorgungsmagnetventils 14. Eine Relaisausgangsleitung 62 führt zu Leitungszweigen 64, 66, an denen nicht dargestellte Federspeicherzylinder angeschlossen sind. An dem Wechselventil 54 ist ferner eine Betriebsbremsleitung 68 angeschlossen. Auf diese Weise kann beim Betätigen der Betriebsbremse automatisch die Feststellbremse geöffnet werden, um eine Überlastung der Federspeicherzylinder zu verhindern. Mit einem Entlüftungsanschluss 70 der Steuerventileinrichtung 22 ist ein erster Anschluss 74 einer Steuer- und Entlüftungsventileinrichtung 72 verbunden. Ein zweiter Anschluss 76 der Steuer- und Entlüftungsventileinrichtung 72 wird von einem Punkt zwischen der Filtereinheit 12 und dem Versorgungsmagnetventil 14 mit Druckluft versorgt. Ein dritter Anschluss 86 der Steuer- und Entlüftungseinrichtung 72 ist mit einer Entlüftung 84 des Relaisventils 58 verbunden. Weiterhin ist ein als ein 2/2-Wegeventil ausgelegtes Entlüftungsmagnetventil 78 vorgesehen, das mit dem Versorgungsleitungsabschnitt 16 verbunden ist. Das Entlüftungsmagnetventil 78 weist einen Entlüftungsmagnetventilanschluss 88 auf, der in einer eigenen Entlüftung mündet oder mit der Entlüftung 84 des Relaisventils 58 verbunden sein kann. Es sind ferner Drucksensoren 80, 82 zum Erfassen der Drücke an dem zweiten Arbeitsanschluss 24 der Steuerventileinrichtung 22 sowie der Relaisausgangsleitung 62 vorgesehen.

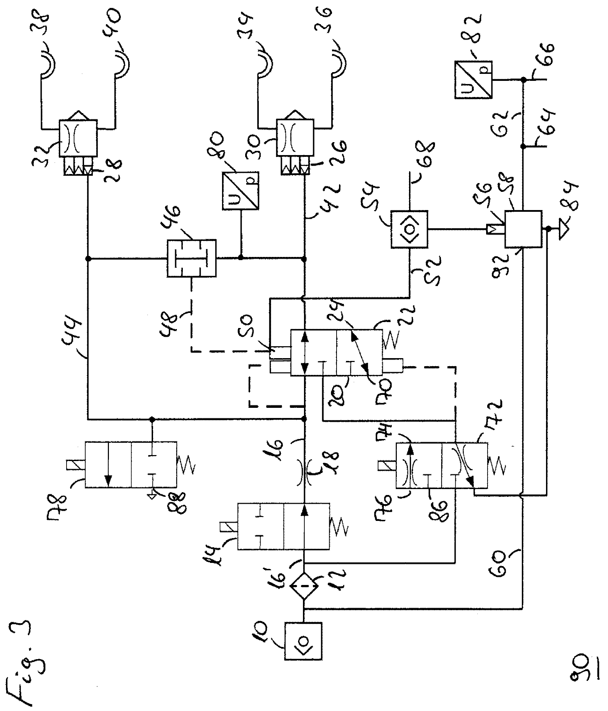

Bei dem in Figur 1 dargestellten Schaltzustand des elektrisch betätigbaren Feststellbremssystems 90 befinden sich das Versorgungsmagnetventil 14, die Steuerventileinrichtung 22, das Entlüftungsmagnetventil 78 und die Steuer- und Entlüftungsventileinrichtung 72 jeweils in einer ersten Schaltposition. In dem dargestellten Schaltzustand ist der zweite Arbeitsanschluss 24 der Steuerventileinrichtung 22 über die Steuer- und Entlüftungsventileinrichtung 72 entlüftet, so dass in Abwesenheit einer Druckbeaufschlagung über die Betriebsbremsleitung 68 auch der Steuereingang 56 des Relaisventils 58 entlüftet ist. Folglich sind die nicht dargestellten Federspeicherzylinder drucklos, so dass sich die Feststellbremse in ihrer Parkstellung befindet. Dementsprechend ist die Relaissteuerleitung 52 drucklos und die nicht dargestellten Federspeicherbremszylinder geschlossen. Weiterhin liegt an den Steueranschluss 36 ein Steuerdruck für einen Anhänger an, während an dem Steueranschluss 40 gerade kein Steuerdruck für einen Anhänger anliegt. Zum Überführen der Feststellbremse in eine Fahrstellung, die in Figur 3 dargestellt ist, wird die Steuer- und Entlüftungsventileinrichtung 72 in die nicht dargestellte Schaltposition umgeschaltet. Folglich baut sich insbesondere in dem Steuerleitungszweig 42, der Relaissteuerleitung 52 und an dem Relaissteuereingang 56 ein Druck auf. Dieser Druck führt beim Überschreiten eines Schwellenwertes zum Durchschalten des Relaisventils 58, so dass die Federspeicherzylinder mit Druck beaufschlagt werden und die Feststellbremse gelöst wird. Ebenso ist der Druck in der Steuerleitung 48 die treibende Kraft zum Umschalten des Steuerventils 22. Je nach Schaltstrategie kann dieses Umschalten erfolgen, bevor oder nachdem die Steuer- und Entlüftungsventileinrichtung 72 wieder in ihren dargestellten stromlosen Zustand überführt wird. Wurde somit also wie auch immer erreicht, dass die Steuerventileinrichtung 22 umgeschaltet hat, so kann sich der Druck an den Steuereingängen 50 und 56 der Steuerventileinrichtung 22 und des Relaisventils 58 weiter aufbauen, da die entsprechenden Leitungszweige nun aus dem Versorgungsleitungsabschnitt 16 mit Druckluft versorgt werden. Insbesondere verbleibt die Steuerventileinrichtung 22 beim Ausbleiben weiterer Schaltvorgänge der Magnetventile 14, 72, 78 in ihrem Zustand. Ein Stromausfall hat hierauf keinen Einfluss, so dass kein unbeabsichtigtes Überführen der Feststellbremsanlage 90 in ihren Parkzustand stattfinden kann. Ein solches Umschalten erfolgt hingegen planmäßig dadurch, dass das Entlüftungsmagnetventil 78 bestromt wird, so dass der Druck im Versorgungsleitungsabschnitt und somit auch an den Steuereingängen 50, 56 der Steuerventileinrichtung 22 und des Relaisventils 56 abnimmt. Dies führt zu einem Umschalten der Steuerventileinrichtung 22 in ihre dargestellte Stellung und zu einem nachfolgenden vollständigen Entlüften der Steuereingänge 50, 56 der Steuerventileinrichtung 22 und des Relaisventils 58. Die so eingenommene Parkstellung ist durch die Federwirkung in der Steuerventileinrichtung 22 gesichert, so dass ein Stromausfall wiederum nicht dazu führen kann, dass unbeabsichtigt ein Übergang vom Parkzustand in den Fahrzustand erfolgen kann.

Vor dem Abstellen des Fahrzeuges wird zum Schließen des Feststellbremssystems 90 die in den nicht dargestellten Federspeicherbremszylindern vorhandene Druckluft über die beiden Leitungszweige 64, 66 durch die Entlüftung 84 abgelassen.

Dabei werden mehrere Liter Druckluft aus den Federspeicherbremszylindern und den Zuführleitungen abgelassen, so dass eventuell an der Entlüftung 84 anhaftende Verschmutzungen oder Eis, welche sich während der vorangegangen Fahrt angesammelt haben könnten, sicher entfernt werden. Somit ist sichergestellt, dass auch das geringe in den Steuerleitungen des Feststellbremssystems 90 vorhandene Druckluftvolumen über den dritten Anschluss 86 der Steuer- und Entlüftungsventileinrichtung 72 dauerhaft während der gesamten Abstellungszeit über die Entlüftung 84 entweichen kann, ohne dass sich ein Staudruck innerhalb des Feststellbremssystems aufbaut, der zu einem schleichenden Lösen der Feststellbremse führen könnte. Dies ist insbesondere bei erhöhten Leckagen der in dem Feststellbremssystem 90 angeordneten Ventile, insbesondere der Steuerventileinrichtung 22 und des Select-Low-Ventils 46 notwendig.

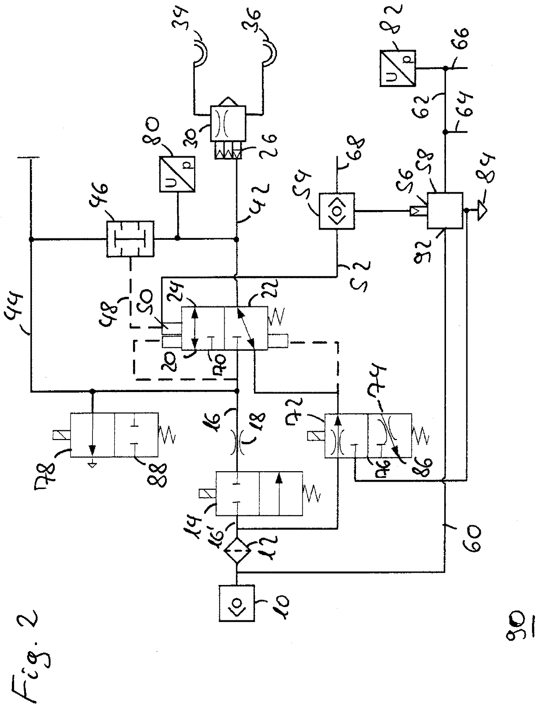

Figur 2 zeigt ein elektrisch beträtigbares Feststellbremssystem in einem zweiten Schaltzustand. In dem dargestellten zweiten Schaltzustand befinden sich die Steuerventileinrichtung 22 in einer ersten Schaltposition, während das Versorgungsmagnetventil 14, die Steuer- und Entlüftungsventileinrichtung 72 und das Entlüftungsmagnetventil 78 in ihre zweite Schaltposition überführt sind. Dies kann beispielsweise durch Bestromen der Ventile 14, 72, 78 realisiert sein. In diesem Schaltzustand bleibt der Steuereingang 50 der Steuerventileinrichtung 22 entlüftet, so dass auch der Relaissteuereingang 56 des Relaisventils 58 entlüftet bleibt, weshalb die Feststellbremse weiterhin geschlossen ist. Allerdings wird der Steuereingang 26 des Anhängersteuerventils 30 belüftet, so dass am Steueranschluss 36 kein Druck bereitgestellt wird, was ein Lösen der Anhängerbremse zur Folge hat, während die Feststellbremse des Zugfahrzeugs eingelegt wird oder bleibt. Es liegt also ein Anhängertestzustand vor, bei dem überprüft werden kann, ob der gesamte aus Zugfahrzeug und Anhänger bestehende Zug alleine von der Feststellbremse des Zugfahrzeugs gehalten werden kann. Da gegenüber der Figur 1 im vorliegenden Fall auch der weitere Anhängersteuerleitungszweig 44 entlüftet ist, kann in analoger Weise bei dem in Figur 2 nicht dargestellten Anhängersteuermodul 32 ein Anhängertestzustand initialisiert werden.

Figur 3 zeigt ein elektrisch betätigbares Feststellbremssystem in einem dritten Schaltzustand. Analog zu dem in Figur 1 dargestellten Schaltzustand befinden sich das Versorgungsmagnetventil 14, die Steuer- und Entlüftungsventileinrichtung 72 und das Entlüftungsmagnetventil 78 in ihrer ersten Schaltposition. In Gegensatz zu Figur 1 befindet sich die Steuerventileinrichtung 22 allerdings in ihrer zweiten Schaltposition, so dass die Relaissteuerleitung 52 belüftet und die Feststellbremse geöffnet ist. Das Überführen der Steuerventileinrichtung 22 aus der in Figur 1 dargestellten Schaltposition in die in Figur 3 dargestellte zweite Schaltposition wurde bereits in Zusammenhang mit Figur 1 beschrieben.

Zum Schließen der Feststellbremse, das heißt zum Wechsel aus dem in Figur 3 dargestellten Schaltzustand in den in Figur 1 dargestellten Schaltzustand, kann zunächst das Versorgungsmagnetventil 14 in seinen zweiten nicht dargestellten Schaltzustand überführt werden und anschließend durch das Betätigen des Entlüftungsmagnetventils 78 über den weiteren Anhängersteuerleitungszweig 44 die Steuerleitung 48, die Relaissteuerleitung 52 und die Federspeicherbremszylinder entlüftet werden. Es kann dabei vorgesehen sein, dass der Anhängersteuerleitungszweig 42 synchron durch kurzzeitiges druckinduziertes Überführen der Steuerventileinrichtung 22 in seinem nicht dargestellten Schaltzustand entlüftet wird, so dass das gesamte Feststellbremssystem drucklos ist. Durch anschließendes Überführen des Versorgungsmagnetventils 14 und des Entlüftungsmagnetventils 78 in die in Figur 3 dargestellten ersten Schaltzustände kann dann wiederum der aus Figur 1 bekannte Schaltzustand erreicht werden.

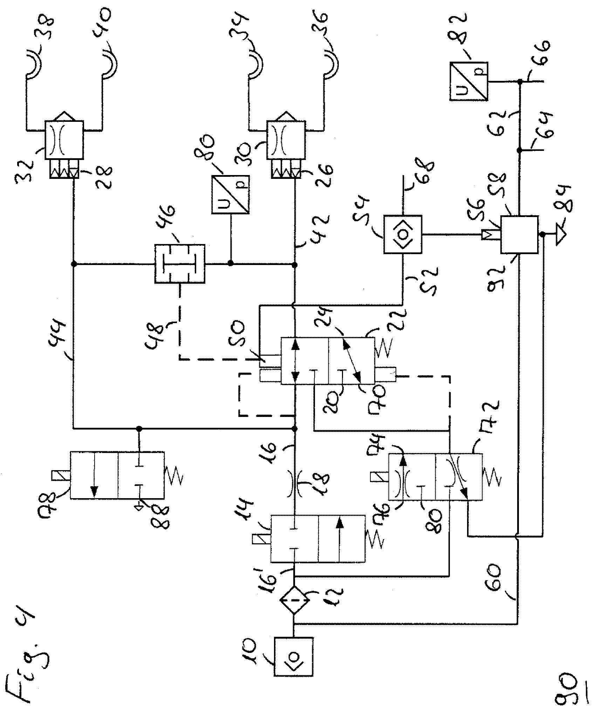

Figur 4 zeigt ein elektrisch betätigbares Feststellbremssystem in einem vierten Schaltzustand. Der in Figur 4 dargestellte vierte Schaltzustand ergibt sich beim Übergang aus dem aus Figur 3 bekannten dritten Schaltzustand, der einer geöffneten Feststellbremse zugeordnet werden kann, und dem aus Figur 1 bekannten ersten Schaltzustand, der einer geschlossen Feststellbremse zugeordnet werden kann. Beim Übergang aus dem dritten Schaltzustand aus Figur 3 zum ersten Schaltzustand aus Figur 1 wird allerdings das Entlüftungsmagnetventil 78 in seinen ersten Schaltzustand überführt, während das Versorgungsmagnetventil 14 in seinem zweiten Schaltzustand verbleibt, so dass keine weitere Entlüftung des Feststellbremssystems mehr möglich ist. Auf dieser Weise ist eine einstellbare Bremswirkung der Federspeicherbremszylinder erzeugbar.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Rückschlagventil
- 12: Filtereinheit
- 14: Versorgungsmagnetventil
- 16: erster Versorgungsleitungsabschnitt
- 16': zweiter Versorgungsleitungsabschnitt
- 18: Drossel
- 20: erster Arbeitsanschluss
- 22: Steuerventileinrichtung
- 24: zweiter Arbeitsanschluss
- 26: Steuereingang
- 28: Steuereingang
- 30: Anhängersteuermodul
- 32: weiteres Anhängersteuermodul
- 34: Versorgungsanschluss
- 36: Steueranschluss
- 38: Versorgungsanschluss
- 40: Steueranschluss
- 42: Anhängersteuerleitungszweig
- 44: weiterer Anhängersteuerleitungszweig
- 46: Select-Low-Ventil
- 48: Steuerleitung
- 50: Steuereingang
- 52: Relaissteuerleitung
- 54: Wechselventil
- 56: Relaissteuereingang
- 58: Relaisventil
- 60: Relaisversorgungsleitung
- 62: Relaisausgangsleitung
- 64: Leitungszweig
- 66: Leitungszweig
- 68: Betriebsbremsleitung
- 70: Entlüftungsanschluss
- 72: Steuer- und Entlüftungsventileinrichtung
- 74: erster Anschluss
- 76: zweiter Anschluss
- 78: Entlüftungsmagnetventil
- 80: Drucksensor
- 82: Drucksensor
- 84: Entlüftung
- 86: dritter Anschluss
- 88: Entlüftungsmagnetventilanschluss
- 90: elektrisch betätigbares Feststellbremssystem
- 92: Versorgungsanschluss

## Patentansprüche

1. Elektrisch betätigbares Feststellbremssystem (90) für ein Fahrzeug, insbesondere ein Nutzfahrzeug, mit
- einer Steuerventileinrichtung (22), die mit einem Relaissteuereingang (56) eines Relaisventils (58) verbundenen ist,
- wobei das Relaisventil (58) einen Versorgungseingang (92) und eine Entlüftung (84) umfasst und zumindest einen Federspeicherbremszylinder belüftet und entlüftet, und
- wobei die Steuerventileinrichtung (22) einen Entlüftungsanschluss (70) umfasst, der mit der Entlüftung (84) des Relaisventils (58) verbunden ist,
- wobei die Steuerventileinrichtung (22) einen ersten Arbeitsanschluss (20) und einen zweiten Arbeitsanschluss (24) umfasst, und
- der erste Arbeitsanschluss (20) mit einem ersten Versorgungsleitungsabschnitt (16) verbunden ist, und
- der zweite Arbeitsanschluss (24) mit einem Anhängersteuerleitungszweig (42) verbunden ist, der in einem Steuereingang (26) eines Anhängersteuermoduls (30) mündet,
**dadurch gekennzeichnet, dass** ein Entlüftungsmagnetventil (78) an einem weiteren Anhängersteuerleitungszweig (44) angeordnet ist, wobei der weitere Anhängersteuerleitungszweig (44) von dem ersten Versorgungsleitungsabschnitt (16) abzweigt, und wobei das Entlüftungsmagnetventil (78) einen Entlüftungsmagnetventilanschluss (88) umfasst, der mit der Entlüftung (84) des Relaisventils (58) verbunden ist.

2. Elektrisch betätigbares Feststellbremssystem nach Anspruch 1, **dadurch gekennzeichnet, dass** der Entlüftungsanschluss (70) über eine Steuer- und Entlüftungsventileinrichtung (72) mit der Entlüftung (84) des Relaisventils (58) verbunden ist.

3. Elektrisch betätigbares Feststellbremssystem nach Anspruch 2, **dadurch gekennzeichnet,**
- **dass** der Entlüftungsanschluss (70) der Steuerventileinrichtung (22) mit einem ersten Anschluss (74) der Steuer- und Entlüftungsventileinrichtung (72) verbunden ist, und
- **dass** die Steuer- und Entlüftungsventileinrichtung (72) einen zweiten Anschluss (76), der mit einem zweiten Versorgungsleitungsabschnitt (16') verbunden ist, und einen dritten Anschluss (86), der mit der Entlüftung (84) verbunden ist, umfasst.

4. Elektrisch betätigbares Feststellbremssystem nach einem der vorhergehenden Ansprüche, **dadurch gekennzeichnet, dass** der Relaissteuereingang (56) über ein Select-Low-Ventil (46) mit dem Anhängersteuerleitungszweig (42) und mit dem weiteren Anhängersteuerleitungszweig (44) verbunden ist.

5. Verfahren zum Betreiben eines elektrisch betätigbaren Feststellbremssystems (90) eines Fahrzeugs, insbesondere eines Nutzfahrzeugs, mit
- einer Steuerventileinrichtung (22), die mit einem Relaissteuereingang (56) eines Relaisventils (58) verbunden ist,
- wobei die Steuerventileinrichtung (22) einen Entlüftungsanschluss (70) umfasst, der mit der Entlüftung (84) des Relaisventils (58) verbunden ist,
- wobei zumindest ein Federspeicherbremszylinder über einen Versorgungsanschluss (92) des Relaisventils (58) belüftet wird und über die Entlüftung (84) des Relaisventils (58) entlüftet wird,
- wobei der Relaissteuereingang (56) des Relaisventils (58) über die Entlüftung (84) des Relaisventils (58) entlüftet wird,
- wobei der Relaissteuereingang (56) von einem Select-Low-Ventil (46) mit Druck beaufschlagt wird, und
- wobei das Select-Low-Ventil (46) weiterhin durch einen Anhängersteuerleitungszweig (42) und einen weiteren Anhängersteuerleitungszweig (44) mit Druck beaufschlagt wird,
**dadurch gekennzeichnet, dass** der weitere Anhängersteuerleitungszweig (44) über einen Entlüftungsmagnetventilanschluss (88) eines Entlüftungsmagnetventils (78) entlüftet wird, wobei der Entlüftungsmagnetventilanschluss (88) mit der Entlüftung (84) des Relaisventils (58) verbunden ist.

6. Verfahren nach Anspruch 5, **dadurch gekennzeichnet, dass** bei geöffneter Feststellbremse der Relaissteuereingang (56) und der Anhängersteuerleitungszweig (42) oder der weitere Anhängersteuerleitungszweig (44) durch kurzzeitiges Betätigen der Steuerventileinrichtung (22) beziehungsweise einer Steuer- und Entlüftungsventileinrichtung (72) teilweise entlüftet wird, um ein teilweises Schließen der Feststellbremse zu bewirken.

## Claims

1. Electrically actuable parking brake system (90) for a vehicle, in particular a commercial vehicle, comprising
- a control valve device (22) connected to a relay control input (56) of a relay valve (58),
- wherein the relay valve (58) comprises a supply input (92) and a vent (84) and ventilates and vents at least one spring brake cylinder, and
- wherein the control valve device (22) comprises a venting port (70) connected to the vent (84) of the relay valve (58),
- wherein the control valve device (22) comprises a first working port (20) and a second working port (24), and
- the first working port (20) is connected to a first supply line section (16), and
- the second working port (24) is connected to a trailer control line branch (42) terminating in a control input (26) of a trailer control module (30),
**characterised in that** a venting solenoid valve (78) is located on a further trailer control line branch (44), the further trailer control line branch (44) branching off the first supply line section (16) and the venting solenoid valve (78) comprising a venting solenoid valve port (88), which is connected to the vent (84) of the relay valve (58).

2. Electrically actuable parking brake system according to claim 1,
**characterised in that** the venting port (70) is connected to the vent (84) of the relay valve (58) via a control and venting valve device (72).

3. Electrically actuable parking brake system according to claim 2,
**characterised in that**
- the venting port (70) of the control valve device (22) is connected to a first port (74) of the control and venting valve device (72), and
- the control and venting valve device (72) comprises a second port (76), which is connected to a second supply line section (16'), and a third port (86), which is connected to the vent (84).

4. Electrically actuable parking brake system according to any of the preceding claims, **characterised in that** the relay control input (56) is connected to the trailer control line branch (42) and the further trailer control line branch (44) via a select-low valve (46).

5. Method for operating an electrically actuable parking brake system (90) for a vehicle, in particular a commercial vehicle, comprising
- a control valve device (22) connected to a relay control input (56) of a relay valve (58),
- wherein the control valve device (22) comprises a venting port (70) connected to the vent (84) of the relay valve (58),
- wherein at least one spring brake cylinder is ventilated via a supply port (92) of the relay valve (58) and vented via the vent (84) of the relay valve (58),
- wherein the relay control input (56) of the relay valve (58) is vented via the vent (84) of the relay valve (58),
- wherein compressed air is applied to the relay control input (56) by a select-low valve (46), and
- wherein compressed air is further applied to the select-low valve (46) by a trailer control line branch (42) and a further trailer control line branch (44),
**characterised in that** the further trailer control line branch (44) is vented via a venting solenoid valve port (88) of a venting solenoid valve (78), the venting solenoid valve port (88) being connected to the vent (84) of the relay valve (58).

6. Method according; to claim 5, **characterised in that**, if the parking brake is released, the relay control input (56) and the trailer control line branch (42) or the further trailer control line branch (44) are partially vented by a temporary actuation of a control and venting valve device (72), in order to effect a partial application of the parking brake.

## Revendications

1. Système (90) de frein de stationnement à actionnement électrique pour un véhicule, notamment pour un véhicule utilitaire, comprenant
- un dispositif (22) de vanne de commande, qui est relié à une entrée (56) de commande de relais d'une vanne (58) relais,
- dans lequel la vanne (58) relais comprend une entrée (92) d'alimentation et une purge (84) et alimente en air et purge au moins un cylindre de frein à ressort accumulateur et
- dans lequel le dispositif (22) de vanne de commande comprend un raccord (70) de purge, qui communique avec la purge (84) de la vanne (58) relais,
- dans lequel le dispositif (22) de vanne de commande comprend un premier raccord (20) de travail et un deuxième raccord (24) de travail et
- le premier raccord (20) de travail communique avec un premier tronçon (16) du conduit d'alimentation et
- le deuxième raccord (24) de travail communique avec une branche (42) du conduit de commande de remorque, qui débouche dans une entrée (26) de commande d'un module (30) de commande de remorque,
**caractérisé en ce qu'**une électrovanne (78) de purge est montée dans une autre branche (44) du conduit de commande de remorque, l'autre branche (44) de conduit de commande de remorque bifurquant du premier tronçon (16) du conduit d'alimentation et l'électrovanne (78) de purge comprenant un raccord (88) d'électrovanne de purge, qui communique avec la purge (84) de la vanne (58) relais.

2. Système de frein de stationnement à actionnement électrique suivant la revendication 1, **caractérisé en ce que** le raccord (70) de purge communique avec la purge (84) de la vanne (58) relais par un dispositif (72) de vanne de commande et de purge.

3. Système de frein de stationnement à actionnement électrique suivant la revendication 2, **caractérisé**
- **en ce que** le raccord (70) de purge du dispositif (22) de vanne de commande communique avec un premier raccord (74) du dispositif (72) de vanne de commande et de purge et
- **en ce que** le dispositif (72) de vanne de commande et de purge comprend un deuxième raccord (76), qui communique avec un deuxième tronçon (16') du conduit d'alimentation, et un troisième raccord (86), qui communique avec la purge (84).

4. Système de frein de stationnement à actionnement électrique suivant l'une des revendications précédentes, **caractérisé en ce que** l'entrée (56) de commande du relais communique par une vanne (46) select-low avec la branche (42) du conduit de commande de remorque et avec l'autre branche (44) du conduit de commande de remorque.

5. Procédé pour faire fonctionner un système (90) de frein de stationnement à actionnement électrique d'un véhicule, notamment d'un véhicule utilitaire, comprenant
- un dispositif (22) de vanne de commande, qui est relié à une entrée (56) de commande de relais d'une vanne (58) relais,
- dans lequel le dispositif (22) de vanne de commande comprend un raccord (70) de purge, qui communique avec la purge (84) de la vanne (58) relais,
- dans lequel au moins un cylindre de frein à ressort accumulateur est alimenté en air par un raccord (92) d'alimentation de la vanne (58) relais et est purgé par la purge (84) de la vanne (58) relais,
- dans lequel l'entrée (56) de commande de relais de la vanne (58) relais est purgée par la purge (84) de la vanne (58) relais,
- dans lequel l'entrée (56) de commande de relais est alimentée en pression par une vanne (46) select-low et
- dans lequel la vanne (46) select-low est alimentée, en outre, par une branche (42) du conduit de commande de la remorque et par une autre branche (44) du conduit de commande de remorque,
**caractérisé en ce que** l'autre branche (44) du conduit de commande de remorque est purgée par un raccord (88) d'électrovanne de purge d'une électrovanne (78) de purge, le raccord (88) d'électrovanne de purge communiquant avec la purge (84) de la vanne (58) relais.

6. Procédé suivant la revendication 5, **caractérisé en ce que**, lorsque le frein de stationnement est desserré, l'entrée (56) de commande de relais et la branche (42) du conduit de commande de remorque sont purgées en partie par un actionnement de courte durée du dispositif (22) de vanne de commande ou d'un dispositif (72) de vanne de commande et de purge pour provoquer une fermeture partielle du frein de stationnement.
